(19) **Europäisches Patentamt**

**European Patent Office**

**Office européen des brevets**

(11) **EP 1 162 528 A2**

(12) **EUROPÄISCHE PATENTANMELDUNG**

(43) Veröffentlichungstag:
**12.12.2001 Patentblatt 2001/50**

(51) Int Cl.⁷: **G05D 1/02**

(21) Anmeldenummer: **01113447.5**

(22) Anmeldetag: **02.06.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **06.06.2000 DE 10027863**

(71) Anmelder: **EADS Deutschland GmbH**
**81663 München (DE)**

(72) Erfinder: **Lohmiller, Winfried Dr.**
**80636 München (DE)**

(54) **Bahnregler für Fahrzeuge mit einer von einer Anströmung beeinflussten Bahn sowie ein Bahnregelsystem und ein Verfahren zu Bildung einer Steuergrösse für derartige Anwendungen**

(57) Fahrzeug-Bahnregler für Fahrzeuge mit einer von einer Strömung beeinflußten Bahn mit manueller oder automatischer Bahn-Steuerung auf der Basis einer Steuergröße (v) für eine Stelleinrichtung (102) zur Ausführung von Steuerbewegungen und auf der Basis von Soll-Bahndaten, wobei dem Bahnregler (101) von einem NavigationsSystem (110) Ist-Bahndaten bezogen auf ein erdfestes Koordinatensystem zur Verfügung gestellt werden und die Steuergröße aus einem Vergleich der Soll-Bahndaten mit den Ist-Bahndaten und einer Regelfunktion abgeleitet wird, wobei der Bahnregler (101) zur Bildung der Steuergröße (v) eine Regelfunktion $f(\chi, \chi_s)$ aufweist, die aufgrund der Abweichung des Ist-Bahnazimutwinkels ($\chi$; 3) von dem Soll-Bahnazimutwinkel ($\chi_s$; 5)eine Stellgröße (101b) für die Stelleinrichtung (102) erzeugt, die eine negative Steigung an der Stelle $\chi = \chi_s$ hat und dort den Wert Null besitzt und die ausgehend von $\chi_s$ nach jedem Abschnitt der Länge $\pi$ einen Vorzeichenwechsel und in diesen Abschnitten ein gleichbleibendes Vorzeichen hat.

Fig. 1

EP 1 162 528 A2

**Beschreibung**

Die Erfindung betrifft einen Bahnregler für Fahrzeuge mit einer von einer Strömung beeinflußten Bahn mit manueller oder automatischer Steuerung, sowie ein Bahnregelsystem und ein Verfahren zur Durchführung der erfindungsgemäßen Bahnregelung. Die Erfindung ist insbesondere für Fallschirme, Flugzeuge und Schiffe vorgesehen.

Es sind Fahrzeug-Bahnregelungen aus dem Stand der Technik bekannt, die auf der Messung der Orientierung des Fahrzeugs gegenüber dem dessen Bahn beeinflussenden strömenden Medium basieren. Hierfür wird der sogenannte strömungsbezogene Azimutwinkel $\theta$ verwendet. Der Azimutwinkel $\theta$ stellt den Winkel zwischen der Luftgeschwindigkeit, also dem Geschwindigkeitsvektor z.B. gegenüber Luft bei Flugzeugen oder Wasser bei Schiffen, und einer vorgegebenen Bezugsrichtung dar. Dies führt zu einem nach dem Stand der Technik linearen Reglerentwurf. Jedoch führt die erforderliche Messung des Ist-Azimutwinkels $\theta$ zu Nachteilen. Die Durchführung dieser Messung mittels Kreiselsystemen ist sehr teuer und Kompaßsysteme sind nur bedingt einsetzbar, wenn metallische Lasten zu transportieren sind. Auch kann aufgrund der nur ungenau bekannten Windverhältnisse der Soll-Azimutwinkel $\theta_s$ nur ungenau aus dem normalerweise vorgegebenen Soll-Bahnazimutwinkel $\chi_s$ bestimmt werden.

Aus der DE 43 36 056 A1 ist ein Fallschirm sowie eine Flugsteuerungseinrichtung zu dessen Steuerung bekannt, bei dem bzw. bei der eine Positionsermittlungseinheit in Form eines GPS-Positionssensors zur Ermittlung von aktuellen Positionsdaten während eines Fluges sowie eine mit dieser in Verbindung stehenden Steuereinheit und einer Stelleinheit verwendet werden. Eine Sollbahn wird von einer Planungseinrichtung vor dem Flug in die Steuerungseinheit übertragen. Im Flug liefert der GPS-Positionssensor kontinuierlich die aktuellen Positionsdaten des Fallschirms an die Steuerungseinheit, in der diese mit den Soll-Flugbahndaten verglichen werden. Bei Abweichung der Ist- von der Soll-Position wird die Stelleinheit betätigt, um den Fallschirm auf der Soll-Flugbahn zu halten.

Aus der DE 196 25 561 A1 ist ein Verfahren zur Kursregelung von Wasserfahrzeugen bekannt, bei dem Positionsdaten des Schiffes mit der über Grund festgelegten Kurslinie verglichen und hieraus eine seitliche Abweichung der Schiffsposition gegenüber der festgelegten Kurslinie über Grund berechnet wird. Ein Autopilot ändert den Ist-Kurs des Schiffes entsprechend, so daß das Schiff der über Grund festgelegten Kurslinie zugeführt wird, diese erreicht und das Schiff auf der festgelegten Kurslinie hält.

Die DE 41 10 249 A1, die als nächstliegender Stand der Technik angesehen wird, offenbart einen Bahnregler für Schiffe mit einem Kaskadenregler, bei dem der Abstand des Schiffes von einer Soll-Bahn, der Kurswinkel und die Kurswinkelgeschwindigkeit des Schiffes zurückgeführt wird. Die Position des Schiffes kann dabei mittels einer Satellitennavigation ermittelt werden. Um Windstörungen zu kompensieren, wird der momentane Schiebewinkel des Schiffes mittels eines bestimmten Verfahrens zur Bestimmung des Verstärkungsfaktors des Ablagereglers minimiert.

Es ist die Aufgabe der Erfindung einen Bahnregler und ein Bahnregelsystem für Fahrzeuge mit einer von einer Strömung beeinflußten Bahn mit manueller oder automatischer Steuerung sowie ein Verfahren zur Ermittlung einer Steuergröße für derartige Anwendungen bereitzustellen, der bzw. das eine Steuerungscharakteristik aufweist bzw. das eine Steuerungscharakteristik verwendet, mit der das Fahrzeug robust gegen äußere Beeinträchtigung in Bezug auf eine Soll-Bahn geführt werden kann.

Diese Aufgabe wird mit den Merkmalen der unabhängigen Ansprüche gelöst. Weitere Ausführungsformen sind in den Unteransprüchen angegeben.

Erfindungsgemäß wird die Bahnregelung auf Basis des Ist-Bahnazimut-Winkels $\chi$ und Soll-Bahnazimut-Winkels $\chi_s$ vorgenommen. Unter dem Bahnazimut-Winkel $\chi$ wird der Winkel zwischen Navigationsgeschwindigkeit, d.h. dem Geschwindigkeitsvektor über Grund, und einer vorgegebenen Bezugsrichtung verstanden.

Im folgenden wird die Erfindung an Hand der beiliegenden Figuren beschrieben, die zeigen:

- Figur 1 eine Ausführungsform eines Regelsystems nach der Erfindung,

- Figur 2 eine beispielhafte Darstellung der erfindungsgemäßen Reglerentwurfsfunktion,

- Figur 3 eine Darstellung der für eine Regelung relevanten Winkel, Richtungen und Geschwindigkeiten beispielhaft für einen Fallschirm.

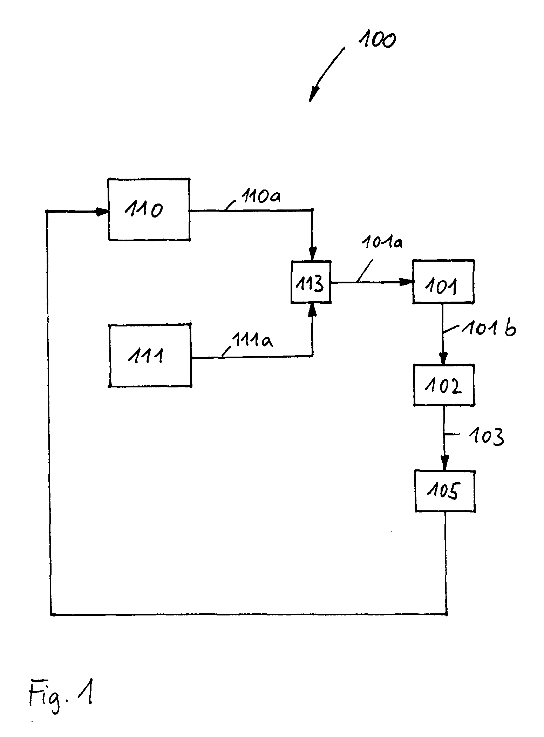

Erfindungsgemäß werden von einem Regelsystem 100 (Figur 1) mittels eines Reglers 101 Stellsignale 101b erzeugt, die das Fahrzeug auf einer Sollbahn über Grund steuern. Der Regler 101 vorzusehen (Figur 1) empfängt als Eingangssignal 101a die Differenz $(\chi - \chi_s)$ = $\Delta\chi$ und gibt als Ausgangssignal 101b ein Stellsignal v ab. Das Stellsignal 101b kann an eine Maschine, z.B. einen Stellantrieb, oder auch an eine Anzeige gehen, aufgrund der ein Pilot die dort dargestellte Steuerungsmaßnahme umsetzen kann. Das Stellsignal 101b geht also an eine Stelleinrichtung 102, deren Steuerbewegung 103 ein bestimmtes Verhalten 105 des Fahrzeugs bewirkt, das im allgemeinen vom Wind beeinflußt ist. Das Fahrzeug-Verhalten 105 wird durch ein Navigationssystem 110 mit einem Ausgangssignal 110a gemessen. Dieses umfaßt vorzugsweise einen Satellitennavigations-Empfänger, da mit diesem der Ist-Bahnazimut $\chi$ als das Ausgangssignal 110a mit verhältnismäßig geringem Aufwand ermittelbar ist. Das erfindungsgemä-

ße Regelsystem 100 umfaßt neben dem Regler 101 und dem Navigationssystem 110 noch eine Flugführungs-Einrichtung 111, das u.a. ein Ausgangssignal 111a liefert, das denSollbahnazimut $\chi_s$ enthält oder diesen ableiten läßt. Ein Differenzbilder 113 bildet aus dem Ist-Bahnazimut $\chi$ und dem Soll-Bahnazimut $\chi$s die Differenz $(\chi - \chi_s) = \Delta\chi$.

Die Flugführungs-Einrichtung 111 ermittelt die Sollbahn über Grund, vorzugsweise in Form diskreter Bahnpunkte oder in Form zumindest eines Zielpunkts oder in Form eines quasi-kontinuierlichen Bahnverlaufs. Die Sollbahn kann sowohl vor als auch während des Fluges generiert werden. Auch kann die Soll-Bahn in einer Einrichung außerhalb des Fahrzeugs , z.B. in einem anderen Fahrzeug oder einer Bodenstation generiert und beispielsweise per Funk vor dem oder während des Fluges an das Regelsystem 100 übertragen werden. Aufgrund dieser Sollbahn über Grund bestimmt die Flugführungs-Einrichtung 111 den momentanen Soll-Bahnazimutwinkel $\chi_s$, der definiert ist als der Winkel zwischen der Tangente der Sollbahn über Grund und einer vorgegebenen Bezugsrichtung. Der Soll-Bahnazimutwinkel $\chi_s$ kann von der momentanen Position und der Zeit abhängen.

Ein Navigationssystem 110, z.B. ein Satelliten-Navigationsssystem, stellt parallel hierzu den Ist-Bahnazimutwinkel $\chi$ zur Verfügung.

Die Stelleinrichtung kann dabei auch der Pilot selbst sein, beispielsweise der Fallschirmspringer, der selbst Steuerleinen betätigt. Die Geräte-technische Integration der genannten Funktionen kann nach dem Stand der Technik in einem einzigen Gerät oder in unterschiedlichen Modulen integriert sein.

Erfindungsgemäß wird im Regler 101 ein erster Teil der Steuergröße v, die in der Figur 1 mit dem Bezugszeichen 101b bezeichnet ist, als Funktion f der Abweichung $\Delta\chi$ des Ist-Bahnazimutwinkels $\chi$ von dem Soll-Bahnazimutwinkel $\chi_s$ in 113 bestimmt. Dabei ist die Funktion f zur Ermittlung der Steuergröße v folgendermaßen bestimmt:

- f besitzt eine negative Steigung an der Stelle $\Delta\chi = 0$ und hat dort den Wert Null und

- hat ausgehend vom Nullpunkt für positives und negatives $\Delta\chi$ nach jedem Abschnitt der Länge $\pi$ einen Vorzeichenwechsel und in diesen Abschnitten ein gleichbleibendes Vorzeichen.

In mathematischer Schreibweise können diese erfindungsgemäßen Merkmale auch folgendermaßen beschrieben werden:

- $f(\Delta\chi) = 0$ für $\Delta\chi = ..., -\pi, 0, \pi, ...$
- $f(\Delta\chi) < 0$ für $..., -2\pi < \Delta\chi < -\pi, 0 < \Delta\chi < \pi, 2\pi < \Delta\chi < 3\pi, ...$
- $f(\Delta\chi) > 0$ für , $-\pi < \Delta\chi < 0, \pi < \Delta\chi < 2\pi, 3\pi < \Delta\chi < 4\pi, ...$

Ein einfaches Beispiel für $f(\Delta\chi)$ ist die sinus-Funktion $f(\Delta\chi) = k \sin(\Delta\chi)$ mit $k < 0$. Auch ist es denkbar, daß der Wertebereich von $\Delta\chi$ auf eine Breite von $2\pi$ begrenzt wird.

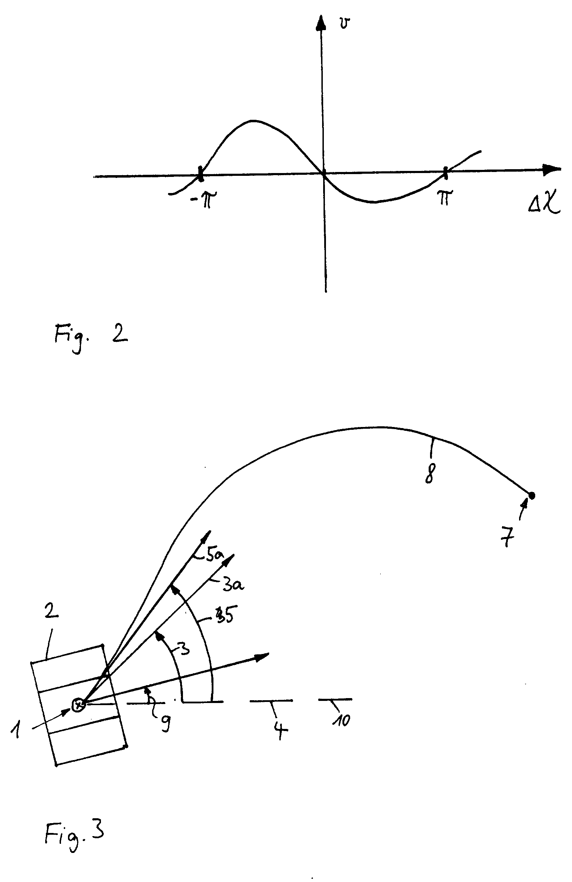

Ein Beispiel für den Verlauf der erfindungsgemäßen Regelfunktion $f(\Delta\chi)$ ist in der Figur 2 dargestellt. Der Verlauf $f(\Delta\chi)$ ist mit dem Bezugszeichen 10 bezeichnet.

Die erfindungsgemäße Steuergröße v kann auch einen weiteren Teil umfassen, der diese um einen Summanden wie ein Dämpfungsglied erweitert. Zumindest eines ihrer Bestandteile ist eine Funktion $v(\Delta\chi)$ mit den voranstehenden Eigenschaften. Auch können weitere Funktionen oder Systeme an die erfindungsgemäße Regelfunktion gekoppelt sein.

Die erfindungsgemäße Regelfunktion muß nicht auf eine Abweichung $\Delta\chi$ bezogen sein, sondern die Bildung der Steuergröße v kann allgemein mittels einer Regelfunktion $f(\chi, \chi_s)$ erfolgen, die aufgrund der Abweichung des Ist-Bahnazimutwinkels $\chi$ von dem Soll-Bahnazimutwinkel $\chi_s$ eine Stellgröße für die Stelleinrichtung 102 erzeugt und die eine negative Steigung an der Stelle $\chi = \chi_s$ hat und dort den Wert Null besitzt und die ausgehend von $\chi_s$ nach jedem Abschnitt der Länge $\pi$ einen Vorzeichenwechsel und in diesen Abschnitten ein gleichbleibendes Vorzeichen hat. Für den allgemeinen Fall ist der Differenzbilder 113 der Figur 1 nicht erforderlich, sondern der Ist-Bahnazimutwinkel $\chi$ und der Soll-Bahnazimutwinkel $\chi_s$ können direkt dem Regler 101 zugeführt werden.

Zur Veranschaulichung der verwendeten Bezeichnungen zeigt die Figur 3 die aktuelle oder Ist-Position 1 eines Fallschirms 2 als Beispiel eines Fahrzeugs, die mittels eines Navigationssystems 110 und mittels des Navigationssystems 110 (Figur 1) z.B. nach Breite und Länge des Ortes auf der Erd-Oberfläche bestimmbar ist. In die Darstellung der Figur 1 ist weiterhin der Ist-Bahnazimutwinkel, der mit dem Bezugszeichen 3 versehen ist, eingetragen, der der Winkel zwischen einer Bezugslinie 4, z.B. der Äquatorlinie, und dem Bahnazimut-Vektor 3a ist. Der Ist-Bahnazimutwinkel 3 wird erfindungsgemäß ebenfalls durch das Navigationssystem 110 und vorzugsweise mittels Satelliten-Navigation bestimmt.

Der durch das Regelsystem 100 berechnete Soll-Bahnazimutwinkel, der in der Figur 1 mit dem Bezugszeichen 5 bezeichnet ist, ist vorzugsweise definiert als der Winkel zwischen der Verbindung der aktuellen Position 1 und der jeweiligen Zielpunkt, die in der Figur 1 das Bezugszeichen 7 besitzt, und der Bezugslinie 4. Er kann auch der Winkel zwischen einer Soll-Bahnazimutrichtung 5a und der Bezugslinie 4 sein (Figur 3). Der Zielpunkt kann auch einer von mehreren diskreten Sollbahn-Punkten sein. In diesem Fall wird auf den nächsten Zielpunkt und damit einen neuen Sollbahnazimutwinkel $\chi_s$ umgeschaltet, wenn das Flugzeug oder der Fallschirm 2 einen vorgegebenen Abstand zum bisher angestrebten Zielpunkt 7 erreicht hat. Der Soll-Bahna-

zimutwinkel $\chi_s$ kann auch aus einem Verlauf einer Sollbahn-Trajektorie 8 ermittelt werden. Zum Vergleich ist auch der Bahnazimutwinkel θ in der Figur 3 eingetragen und besitzt dort das Bazugszeichen 9.

Im folgenden wird die Wirkungsweise der Erfindung beschrieben:

Die Steuergröße v ist die Stellgröße zur Steuerung des Flugzeugs, des Fallschirms oder des Fahrzeugs. Beispielsweise beim Fallschirm kann die Steuergröße v der Weg sein, mit dem eine Steuerleine zu ziehen ist. Aus den Eigenschaften eines spezifischen Fallschirms ergibt sich aus einem bestimmten Ziehweg eine vorbestimmte Reaktion des Fallschirms, z.B. eine vorbestimmte Drehrate. Statt eines Ziehwegs kann auch der Steuereingang oder der Stellweg eines Stellmotors maßgeblich sein, wenn die Steuerung maschinell oder automatisch erfolgt. Die Stellgröße kann je nach dem , wie die Fahrzeug-Steuerung bzw. Regelung funktional konfiguriert ist, beispielsweise durch die Auslenkung der jeweiligen Steuerfläche bzw. der Steuerflächen oder eine Eingangs- oder Ausgangsgröße eines Stellmotors gebildet werden.

Das Verhalten des Fahrzeugs kann durch ein einfaches Modell der Azimutdynamik beschrieben werden. Im Falle des Fallschirms ergibt sich mit der Seileingabe u des Fallschirms, dem Azimutwinkel θ des Fallschirms und der Steuerwirksamkeit g > 0

$$\dot{\Theta} = g \cdot u$$

Weiterhin reagiert die Seileingabe u durch die Motordynamik oder den Mensch erst verzögert auf die Eingabe v, woraus sich ergibt:

$$\dot{u} = -d \cdot u + v$$

Dabei stellt die Größe v ein Verzögerungsglied dar.
Damit ergibt sich folgende Gesamtdynamik:

$$\ddot{\Theta} = -d \cdot g \cdot \dot{\Theta} + g \cdot v$$

Die erfindungsgemäße Regelfunktion führt global zu einem stabilen und instabilen Gleichgewichtspunkt. Dadurch wird der instabile Gleichgewichtspunkt stets verlassen und das Fahrzeug stabilisiert sich bei dem stabilen Gleichgewichtspunkt, welcher den gewünschten Flugzustand mit Sollflugrichtung x - $\chi_s$ = ..., $-2\pi$, 0, $2\pi$ entspricht. Damit werden die Weg- oder Zielpunkte einzeln und robust auf Windstörungen abgeflogen.
Bei großen Fluggeschwindigkeiten entspricht der instabile Gleichgewichtspunkt dem Fall, daß der Fallschirm die richtige Flugrichtung $\chi_s$ hat, jedoch gegen die Flugrichtung ausgerichtet ist. Tritt der Fall ein, daß aufgrund eines zu starken Gegenwindes die Flugrich-tung $\chi_s$ nicht erreicht werden kann, beginnt der Fallschirm zu rotieren. Dies kann dadurch erkannt werden, daß nach einer Fahrzeug-typischen Konvergenzzeit die Sollflugrichtung $\chi_s$ nicht erreicht wird. In diesem Fall muß ein neuer Zielpunkt und damit eine neue Sollflug-richtung $\chi_s$ bestimmt werden.
Bei kleinen Fluggeschwindigkeiten entspricht der instabile Gleichgewichtspunkt einem Flug in eine um 180° verdrehten Sollbahnazimut $\chi_s$.

## Patentansprüche

1. Fahrzeug-Bahnregler für Fahrzeuge mit einer von einer Strömung beeinflußten Bahn mit manueller oder automatischer Bahn-Steuerung auf der Basis einer Steuergröße (v) für eine Stelleinrichtung (102) zur Ausführung von Steuerbewegungen und auf der Basis von Soll-Bahndaten, wobei dem Bahnregler (101) von einem Navigations-System (110) Ist-Bahndaten bezogen auf ein erdfestes Koordinatensystem zur Verfügung gestellt werden und die Steuergröße aus einem Vergleich der Soll-Bahndaten mit den Ist-Bahndaten und einer Regelfunktion abgeleitet wird,
**dadurch gekennzeichnet, daß**
der Bahnregler (101) zur Bildung der Steuergröße (v) eine Regelfunktion f($\chi$,$\chi_s$) aufweist, die aufgrund der Abweichung des Ist-Bahnazimutwinkels ($\chi$; 3) von dem Soll-Bahnazimutwinkel ($\chi_s$; 5)eine Stell-größe (101b) für die Stelleinrichtung (102) erzeugt und

   - die eine negative Steigung an der Stelle $\chi$ = $\chi_s$ hat und dort den Wert Null besitzt und
   - die ausgehend von $\chi_s$ nach jedem Abschnitt der Länge $\pi$ einen Vorzeichenwechsel und in diesen Abschnitten ein gleichbleibendes Vorzeichen hat.

2. Fahrzeug-Bahnregler für Fahrzeuge mit einer vom Wind beeinflußten Bahn nach dem Anspruch 1, **dadurch gekennzeichnet, daß** der Regler (101) eine Abweichung $\Delta\chi$ bildet und die Bildung der Steuergröße v mittels einer Regelfunktion f($\Delta\chi$) erfolgt, die aufgrund der Abweichung $\Delta\chi$ des Ist-Bahnazimut-winkels $\chi$ von dem Soll-Bahnazimutwinkel $\chi_s$ eine Stellgröße für die Stelleinrichtung (102) erzeugt und

   - die eine negative Steigung an der Stelle $\Delta\chi$ = 0 hat und dort den Wert Null besitzt und

   - die ausgehend vom Nullpunkt für positives und negatives $\Delta\chi$ nach jedem Abschnitt der Länge $\pi$ einen Vorzeichenwechsel und in diesen Abschnitten ein gleichbleibendes Vorzeichen hat.

3. Fahrzeug-Bahnregler für Fahrzeuge mit einer vom Wind beeinflußten Bahn nach dem Anspruch 1 oder 2, **dadurch gekennzeichnet, daß** die Sollbahn durch mehrere Zielpunkte definiert ist, welche dann sequentiell mittels der Steuergröße v angesteuert werden.

4. Bahnregelsystem für Fahrzeuge mit einer vom Wind beeinflußten Bahn mit manueller oder automatischer Steuerung auf der Basis von Soll-Bahndaten, wobei einem Bahnregler (101) von einem Navigations-System (110) Ist-Bahndaten bezogen auf ein erdfestes Koordinatensystem zur Verfügung gestellt werden, der eine Steuergröße aus einem Vergleich der Soll-Bahndaten mit den Ist-Bahndaten mittels einer Regelfunktion nach dem Anspruch 1 oder 2 zur Übermittlung an eine Stelleinrichtung (102) zur Ausführung von Steuerbewegungen ableitet.

5. Fahrzeug-Bahnregler für Fahrzeuge mit einer vom Wind beeinflußten Bahn nach einem der voranstehenden Ansprüche, wobei der Fahrzeug-Bahnregler (101) für Fallschirme, Flugzeuge oder Schiffe verwendet wird.

6. Verfahren zur Bildung einer Steuergröße v für eine Fahrzeug-Bahnregelung für Fahrzeuge mit einer von einer Strömung beeinflußten Bahn mit manueller oder automatischer Steuerung
**dadurch gekennzeichnet, daß**
die Bildung der Steuergröße v mittels einer Regelfunktion $f(\chi, \chi_s)$ erfolgt, die aufgrund der Abweichung des Ist-Bahnazimutwinkels $\chi$ von dem Soll-Bahnazimutwinkel $\chi_s$ eine Stellgröße für die Stelleinrichtung (102) erzeugt und

- die eine negative Steigung an der Stelle $\chi = \chi_s$ hat und dort den Wert Null besitzt und
- die ausgehend von $\chi_s$ nach jedem Abschnitt der Länge $\pi$ einen Vorzeichenwechsel und in diesen Abschnitten ein gleichbleibendes Vorzeichen hat.

Fig. 1

Fig. 2

Fig. 3